# EUROPÄISCHE PATENTSCHRIFT

(11) **EP 3 507 784 B1**
(45) Veröffentlichungstag und Bekanntmachung des Hinweises auf die Patenterteilung: **07.10.2020**
(21) Anmeldenummer: 17758084.2
(22) Anmeldetag: 11.08.2017
(51) Int. Cl.: G08G 1/01, G08G 1/0967

(54) **VERFAHREN ZUM UNTERSTÜTZEN EINES BENUTZERS BEIM BETREIBEN EINES KRAFTFAHRZEUGS UND KRAFTFAHRZEUGEXTERNE DATENSERVEREINRICHTUNG**
METHOD FOR ASSISTING A USER IN THE OPERATION OF A MOTOR VEHICLE, AND MOTOR-VEHICLE-EXTERNAL DATA SERVER DEVICE
PROCÉDÉ POUR AIDER UN UTILISATEUR À UTILISER UN VÉHICULE AUTOMOBILE ET SERVEUR DE DONNÉES EXTÉRIEUR AU VÉHICULE AUTOMOBILE

(30) Priorität: 02.09.2016 DE 102016216602
(43) Veröffentlichungstag der Anmeldung: 10.07.2019
(73) Patentinhaber: Audi AG, 85045 Ingolstadt (DE)
(72) Erfinder: SCHÖN, Torsten, 85111 Pietenfeld (DE)
(86) Internationale Anmeldenummer: PCT/EP2017/070398
(87) Internationale Veröffentlichungsnummer: WO 2018/041601

(56) Entgegenhaltungen:
- DE-A1- 10 219 531
- US-A- 5 812 069
- US-A1- 2015 135 800
- US-A1- 2016 133 130
- US-B1- 9 349 287

## Beschreibung

Die Erfindung betrifft ein Verfahren zum Unterstützen eines Benutzers eines Kraftfahrzeugs beim Betreiben des Kraftfahrzeugs, das sich in einem geographischen Gebiet befindet. Einige der Verfahrensschritte des erfindungsgemäßen Verfahrens werden dabei durch eine kraftfahrzeugexterne Datenservereinrichtung durchgeführt, die eine Information oder Informationen zu beispielsweise einem Wetter bereitstellen kann.

Heutzutage werden Kraftfahrzeuge, je nach Konfiguration, mit einer vielfältigen Sensorik ausgestattet. Diese kann beispielsweise eine Verkehrslage oder beispielsweise Regen detektieren oder eine Temperatur messen. In einer Fahrzeugflotte werden alle Fahrzeuge mit einer solchen Sensorik ausgestattet, zum Beispiel verfügen alle Fahrzeuge über einen Regensensor. Dieser ermittelt einen aktuellen Niederschlag und verwendet diesen zum Beispiel für das Einstellen der Scheibenwischer.

Aufgrund der heutigen Vielfalt an Sensorik, insbesondere der Vielfalt an Sensorik für meteorologische Parameter wie Niederschlag, Temperatur oder Luftfeuchtigkeit, haben dadurch alle Fahrzeuge mehrere Sensoreinrichtungen, das heißt mehrere Geräte oder Gerätekomponenten, die zum Erfassen einer physikalischen oder chemischen Eigenschaft der Umgebung des Kraftfahrzeugs eingerichtet sind.

Die DE 10 2015 119 495 A1 schlägt ein Verfahren zum partizipativen Messen von Fahrbahnhaftungsbedingungen vor, bei dem solche Haftungsdaten von vielen Fahrzeugen gesammelt werden. Ein zentraler Datenserver sammelt und verarbeitet die Daten.

Eine Kommunikation einer Vielzahl von Fahrzeugen mit einer Verwaltungsvorrichtung als Backend wird durch die DE 10 2014 220 687 A1 beschrieben, wobei Sensordaten der Sensoreinrichtungen der Kraftfahrzeuge zyklisch erfasst und in einem Umfeldmodell der Datenbank gespeichert werden.

Die Nutzung eines Backends als Auswerteeinheit wird ebenfalls durch die DE 10 2011 084 275 A1 beschrieben, wobei die Rohdaten eines Kraftfahrzeugs ausgewertet und dann an das gleiche Kraftfahrzeug zurückgesendet werden.

Der Artikel von Hansa Automotive (01.06.2016, "Mobileye und ST Microelectronics entwickeln SoC für autonome Fahrzeuge") beschreibt beispielhafte Sensoriken für vollautonome Fahrzeuge.

Die DE 101 39 668 A1 beschreibt ein Verfahren zum Erzeugen von fahrtroutenbezogenen Wetter- und/oder Straßenzustandsinformationen für ein Fahrzeug mit einer Zentraleinheit.

Die US 2016/133130 A1 beschreibt ein Verfahren zum teilnehmenden Detektieren von Ereignissen und Konditionen durch Straßenfahrzeuge, das Sammeln von dieser Daten einer großen Anzahl von Straßenfahrzeugen durch einen zentralen Server, das Verarbeiten der Daten zum Identifizieren von Ereignissen und Konditionen, die an einem bestimmten Ort von Interesse sein könnten, und das Versenden von Benachrichtigungen über Ereignisse und Konditionen an die Fahrzeuge.

Bei diesen Verfahren ergibt sich jedoch nachteilig, dass für jedes Kraftfahrzeug eine notwendige Sensorik eingebaut werden muss, da diese in jedem Fahrzeug verfügbar sein soll. Dadurch ergibt sich nicht nur eine Erhöhung der Kosten für ein Kraftfahrzeug, sondern in jedem Kraftfahrzeug einen erhöhten Bauraumbedarf.

Eine der Erfindung zugrundeliegende Aufgabe ist das des Kostenaufwands und Bauraumbedarfs.

Die Aufgabe wird von dem erfindungsgemäßen Verfahren und dem erfindungsgemäßen System gemäß den unabhängigen Patentansprüchen gelöst. Vorteilhafte Weiterbildungen der Erfindung sind durch die Unteransprüche gegeben.

Die Erfindung basiert auf der Idee, in einem Kraftfahrzeug die jeweilig vorhandene Sensoreinrichtung zu nutzen und die Sensorinformation an ein anderes Fahrzeug zu übertragen oder an mehrere Fahrzeuge zu verteilen. Dies ist besonders für einen Flottenbetreiber effizient. Außerdem kann bei den empfangenden Kraftfahrzeugen die jeweilige Sensorik eingespart werden.

Das erfindungsgemäße Verfahren zum Unterstützen eines Benutzers eines ersten Kraftfahrzeugs beim Betreiben des ersten Kraftfahrzeugs, das sich in einem geographischen Gebiet befindet, umfasst zunächst den durch eine kraftfahrzeugexterne Datenservereinrichtung durchgeführten Schritt des Unterteilens des geographischen Gebiets in mehrere geographische Sektoren. Das geographische Gebiet kann dabei beispielsweise ein Stadtgebiet oder eine Region sein. Der geographische Sektor kann dabei als Teilfläche des Gebiets bezeichnet werden. Mit anderen Worten kann der geographische Sektor als Teilgebiet des Gebiets bezeichnet werden.

Durch eine Sensoreinrichtung eines zweiten Kraftfahrzeugs erfolgt ein Erfassen von zumindest einem Messwert, also beispielsweise einer Verkehrsdichte, einer Durchschnittsgeschwindigkeit, einer Umgebungslautstärke, einer Temperatur, einer Luftfeuchtigkeit oder eines Niederschlags. Ist der Messwert beispielsweise ein Wettermesswert, ist der Messwert ein Wert eines meteorologischen Parameters, wobei der meteorologische Parameter ein Parameter ist, der ein Wetter und/oder eine Wetterlage beschreibt. Das zweite Kraftfahrzeug befindet sich dabei ebenfalls in dem Gebiet, in dem sich das erste Kraftfahrzeug befindet. Eine Steuereinrichtung des zweiten Kraftfahrzeugs erzeugt ein Sensorsignal, das den Messwert und eine aktuelle Position des zweiten Kraftfahrzeugs beschreibt. Die aktuelle Position kann dabei zum Beispiel durch geographische Koordinaten des zweiten Kraftfahrzeugs beschrieben sein. Unter einer Steuereinrichtung wird ein Gerät oder eine Gerätekomponente verstanden, das oder die zum Empfangen und Erzeugen und Übertragen von Steuersignalen eingerichtet ist, und beispielsweise als Steuerchip oder Mikroprozessor ausgestaltet sein kann. Die Steuereinrichtung überträgt dann das Sensorsignal an die kraftfahrzeugexterne Datenservereinrichtung. Beschreibt das Sensorsignal einen Wettermesswert, kann das Sensorsignal auch als Wettersignal bezeichnet werden.

Durch die kraftfahrzeugexterne Datenservereinrichtung erfolgt ein Empfangene eines Anfragesignals von dem ersten Kraftfahrzeug, wobei das erste Kraftfahrzeug zum Zeitpunkt des Übertragens des Anfragesignals nicht dazu eingerichtet ist, einen Messwert derselben Art, das heißt einen Messwert beispielsweise des gleichen meteorologischen Parameters wie derjenige, der durch den Messwert des zweiten Kraftfahrzeugs beschrieben wird, zu erfassen. Das Anfragesignal beschreibt dabei eine aktuelle Position des ersten Kraftfahrzeugs. Das Anfragesignal ist dabei als Signal zu verstehen, das an die kraftfahrzeugexterne Datenservereinrichtung eine Anfrage zum Übertragen von einem Sensorsignal stellen kann.

Anhand der aktuellen Positionen der Kraftfahrzeuge erfolgt durch die Datenservereinrichtung ein Ermitteln, ob sich die Kraftfahrzeuge innerhalb des gleichen geographischen Sektors befinden. Hierzu kann die Datenservereinrichtung beispielsweise die Koordinaten beider Kraftfahrzeuge mit dem von dem geographischen Sektor und/oder den geographischen Sektoren umfassenden Koordinaten vergleichen.

Falls sich das erste Kraftfahrzeug und das zweite Kraftfahrzeug innerhalb des gleichen geographischen Sektors befinden, erfolgt durch die Datenservereinrichtung ein Übertragen des Sensorsignals an eine Steuereinrichtung des ersten Kraftfahrzeugs.

Hierdurch ergibt sich eine große finanzielle Einsparung an Sensorikkosten für beispielsweise Flottenfahrzeuge. Mit anderen Worten muss nicht jedes Kraftfahrzeug mit einer Sensoreinrichtung zum beispielsweisen Erfassen einer Verkehrsdichte oder Temperatur ausgestattet werden. In einem Kraftfahrzeug ohne die entsprechende Sensoreinrichtung wird dann auch weniger Bauraum beansprucht, der anderweitig genutzt werden kann. Dadurch können auch andere Kraftfahrzeugmodelle oder frühere Kraftfahrzeugmodelle Wetterdaten verwenden, auch wenn in diesen Modellen keine entsprechende Sensoreinrichtung vorgesehen ist. Außerdem müssen sich beide Kraftfahrzeuge nicht in einer unmittelbaren Nähe zueinander befinden, um eine Fahrzeug-zu-Fahrzeug-Kommunikationsverbindung aufzubauen.

Bei Fahrzeugflotten, beispielsweise eines Taxiunternehmens oder in einer Gesamtheit von einem bestimmten Hersteller hergestellter Kraftfahrzeuge, ist eine solche Kosteneinsparung erheblich. Für den Benutzer des ersten Kraftfahrzeugs ergibt sich eine Erhöhung des Fahrkomforts, und zudem auch eine Erhöhung der Fahrsicherheit, da ihm nun Daten zur Verfügung stehen, die sein Fahrzeug zum Beispiel gar nicht erfassen kann, oder die das Fahrzeug zum Zeitpunkt des Aussendens des Anfragesignals nicht erfassen kann.

Bei einer Fahrzeugflotte mit mehr als zwei Kraftfahrzeugen kann es dementsprechend mehrere Kraftfahrzeuge geben, deren jeweilige Sensoreinrichtung dazu eingerichtet ist, den entsprechenden Parameter zu erfassen, beispielsweise den meteorologischen Parameter, und Kraftfahrzeuge, deren Sensoreinrichtung zum Beispiel gerade nicht in Betrieb ist oder die keine solche Sensoreinrichtung aufweisen.

Um eine flächendeckende Abdeckung mit aktiven Sensoreinrichtungen zu erfassen, führt die kraftfahrzeugexterne Datenservereinrichtung ein Ermitteln einer jeweiligen Anzahl von Kraftfahrzeugen in mindestens einem der geographischen Sektoren durch, wobei jedes der Kraftfahrzeuge dazu eingerichtet ist, einen Messwert gleicher Art zu erfassen. Dadurch entsteht ein Überblick, wie gut die einzelnen Sektoren mit beispielsweise Niederschlagssensoren abgedeckt sind. Bei einem Unterschreiten einer vorgegebenen Mindestanzahl durch die ermittelte Anzahl an Kraftfahrzeugen erfolgt ein Erzeugen eines Steuersignals zum Steuern eines der Kraftfahrzeuge zum Erhöhen der Anzahl an Kraftfahrzeugen, die dazu eingerichtet sind, den Messwert gleicher Art zu erfassen.

Gemäß einer besonders bevorzugten Ausführungsform des erfindungsgemäßen Verfahrens kann eine Sensoreinrichtung des ersten Kraftfahrzeugs zumindest einen Messwert einer anderen Art erfassen, das heißt zum Beispiel einen Messwert eines anderen meteorologischen Parameters als derjenige meteorologische Parameter, der durch den Messwert der Sensoreinrichtung des zweiten Kraftfahrzeugs beschrieben wird. Erfasst die Sensoreinrichtung des zweiten Kraftfahrzeugs beispielsweise einen Niederschlag, so kann die Sensoreinrichtung des ersten Kraftfahrzeugs beispielsweise eine Temperatur erfassen. Erfasst die Sensoreinrichtung des zweiten Kraftfahrzeugs beispielsweise eine Verkehrsdichte, so kann die Sensoreinrichtung des ersten Kraftfahrzeugs beispielsweise eine Durchschnittsgeschwindigkeit und/oder einen Stau erfassen. Mit anderen Worten erfasst die Sensoreinrichtung des ersten Kraftfahrzeugs einen Messwert eines anderen Messwerttyps einer gleichen Kategorie. Durch eine Steuereinrichtung des ersten Kraftfahrzeugs erfolgt ein Erzeugen eines Sensorsignals, das den Messwert der anderen Art und die aktuelle Position des ersten Kraftfahrzeugs beschreibt. Das Sensorsignal des ersten Kraftfahrzeugs kann dann an die kraftfahrzeugexterne Datenservereinrichtung übertragen werden.

Die kraftfahrzeugexterne Datenservereinrichtung kann ein Empfangen eines Anfragesignals von dem zweiten Kraftfahrzeug durchführen, wobei das zweite Kraftfahrzeug zum Zeitpunkt des Übertragens des Anfragesignals nicht dazu eingerichtet ist, einen Messwert der anderen Art zu erfassen, und wobei das Anfragesignal eine aktuelle Position des zweiten Kraftfahrzeugs beschreibt. Mit anderen Worten ist die Sensoreinrichtung des zweiten Kraftfahrzeugs beispielsweise nicht dazu eingerichtet, eine Temperatur zu erfassen.

Falls sich das erste Kraftfahrzeug und das zweite Kraftfahrzeug innerhalb des gleichen geographischen Sektors befinden, erfolgt ein Übertragen des Sensorsignals an die Steuereinrichtung des zweiten Kraftfahrzeugs.

Durch ein solches "Austauschen" von Sensorsignalen kann jedes der beiden Kraftfahrzeuge Wetterdaten ergänzen, die die eigene Sensoreinrichtung nicht oder momentan nicht erfassen kann.

In einer Ausführungsform kann das Ermitteln der jeweiligen Anzahl von Kraftfahrzeugen innerhalb mindestens zwei der geographischen Sektoren erfolgen, wobei jedes Kraftfahrzeug dazu eingerichtet ist, einen Messwert gleicher Art zu erfassen. Vorzugsweise kann die Datenservereinrichtung dabei die jeweilige Anzahl in allen geographischen Sektoren ermitteln.

Bei dem Unterschreiten der vorgegebenen Mindestanzahl durch die ermittelte Anzahl an Kraftfahrzeugen in einem ersten der mindestens zwei Sektoren kann dann das Steuersignal ein Navigationssignal sein, das ein Navigieren eines der Kraftfahrzeuge aus einem anderen der mindestens zwei geographischen Sektoren in den ersten Sektor beschreiben kann. Das Steuersignal kann an das Kraftfahrzeug in dem anderen Sektor übertragen werden. Dies dient zum Erhöhen der Anzahl an Kraftfahrzeugen, die dazu eingerichtet sind, den Messwert gleicher Art zu erfassen, in dem ersten Sektor.

Hierdurch erfolgt eine möglichst gleichmäßige Verteilung von Kraftfahrzeug mit entsprechend eingerichteten Sensoreinrichtungen. Dies ermöglicht auch zum Beispiel das Organisieren von Fahraufträgen einer Fahrzeugflotte. Auch ein Taxiunternehmen oder Carsharing-Unternehmen kann beispielsweise mithilfe dieser Weiterbildung Fahraufträge derart organisieren, dass denjenigen Kraftfahrzeugen, deren Sensoreinrichtung nicht zum Erfassen des Messwerts eingerichtet ist, möglichst in jedem geographischen Sektor ein Sensorsignal des zweiten Kraftfahrzeugs zur Verfügung steht.

Es kann auch zum Beispiel der Fall vorliegen, dass eine vorhandene Sensoreinrichtung des ersten Kraftfahrzeugs insofern nicht zum Erfassen des Messwerts eingerichtet ist, als das die Sensoreinrichtung zum Zeitpunkt des Übertragens des Anfragesignals zum Beispiel abgeschaltet sein kann. Die Anzahl an Kraftfahrzeugen in einem Sektor, die dazu eingerichtet sind, den Messwert gleicher Art zu erfassen, kann dann gemäß einer anderen Weiterbildung oder einer Ergänzung zu der vorherigen Weiterbildung erhöht werden. Falls sich das erste Kraftfahrzeug und das zweite Kraftfahrzeug nicht innerhalb des gleichen geographischen Sektors befinden, kann ein Übertragen des erzeugten Steuersignals an das erste Kraftfahrzeug erfolgen, wobei das Steuersignal ein Aktivierungssignal sein kann, das ein Aktivieren einer Sensoreinrichtung des ersten Kraftfahrzeugs zum Erfassen des Messwerts beschreiben kann. Zum Beispiel kann das Aktivierungssignal beispielsweise einen Niederschlagssensor anschalten.

Durch beide Weiterbildungen wird vorteilhaft eine flächenmäßige Abdeckung mit entsprechend ausgestatteten Kraftfahrzeugen verbessert und damit auch eine Aussagekraft der empfangenen Sensorsignale erhöht.

Um eine besonders dynamische und flexible Fahrzeugverteilung und gleichzeitig eine Erhöhung einer Qualität einer Aussage des Sensorsignals zu erreichen, kann gemäß einer weiteren Ausführungsform des erfindungsgemäßen Verfahrens das Unterteilen des Gebiets in die geographischen Sektoren in Abhängigkeit von einer Art des Messwerts erfolgen, wobei die Art des Messwerts eine Größe oder eine Abmessung des geographischen Sektors festlegen kann.

Die Größe eines geographischen Sektors zum Beispiel anhand meteorologischer Erfahrungswerte und Erkenntnisse ermittelt werden. Beschreibt beispielsweise der Messwert einen Niederschlag, so kann eine Sektorengröße von beispielsweise im Radius von zwei Kilometern sinnvoll sein. Beschreibt der Messwert beispielsweise einen Temperatur, kann es beispielsweise ausreichend sein, wenn der geographische Sektor beispielsweise einen Radius von vier Kilometern aufweist. Da Niederschlag oft ein sehr lokales räumlich beschränktes Ereignis sein kann, sind Zuverlässigkeit und Aussagekraft eines empfangenen Sensorsignales umso höher, wenn es in dem beispielhaften Radius von zwei Kilometern ausgesendet wurde.

In oben beschriebenen Falle, dass beide Kraftfahrzeuge je ein Sensorsignal an die Datenservereinrichtung übertragen, wobei die Sensorsignale unterschiedliche Typen des Messwertes beschreiben, kann die Datenservereinrichtung das Gebiet für jeden der Messwerte unterschiedlich unterteilen. In dieser Weiterbildung kann die Datenservereinrichtung also spezifisch für ein Anfragesignal die Sektorengröße ändern, beispielsweise in Abhängigkeit davon, ob das Anfragesignal eine Anfrage zu einem Niederschlag oder eine Anfrage zu einer Temperatur beschreibt.

Das Unterteilen des Gebiets in die geographischen Sektoren kann alternativ oder zusätzlich in Abhängigkeit von einer geographischen Eigenschaft der Umgebung des zweiten Kraftfahrzeugs und/oder einer natürlichen oder unnatürlichen Grenze der Umgebung mit der ermittelten Eigenschaft erfolgen. Eine geographische Eigenschaft kann dabei beispielsweise ein Landschaftstyp sein. Als natürliche Grenze kann beispielsweise ein Seeufer, eine tiefe Schlucht oder ein Gebirgszug oder ein Waldrand um einen Wald herum verstanden werden. Beispiele einer unnatürlichen Grenze der Umgebung sind beispielsweise ein Stadtrand und ein Anfangs- und Endpunkt eines Tunnels. Hierdurch wird berücksichtigt, dass beispielsweise ein Mikroklima oder ein Wetter oder eine Wetterlage von solchen Grenzen oder Eigenschaften beeinflusst wird. So ist beispielsweise innerhalb einer großen Stadt die Temperatur meist höher als in einer angrenzenden Landschaft. Alternativ kann eine Größe des Sektors zum Beispiel von einer Stauanfälligkeit abhängen, so kann beispielsweise ein Sektor einen Streckenabschnitt mit Serpentinen oder einem sehr befahrenen Autobahnkreuz eingrenzen.

Vorteilhafterweise kann die Datenservereinrichtung in Abhängigkeit von einer durch das Sensorsignal beschriebenen Art des Messwerts ein Erzeugen eines Steuersignals zum Aktivieren eines Scheibenwischers und/oder einer Klimaanlage und/oder einer Nebelleuchte durchführen. Der Messwert kann dann ein Wettermesswert und das Sensorsignal ein Wettersignal sein. Das Steuersignal kann dann an das erste Kraftfahrzeug übertragen werden. Somit kann der beispielhafte Scheibenwischer automatisch gesteuert werden, auch wenn das erste Kraftfahrzeug keinen Regensensor aufweist. Hierdurch werden Fahrkomfort und Fahrsicherheit deutlich erhöht.

Die oben gestellte Aufgabe wird ebenfalls gelöst von einem System mit einem ersten Kraftfahrzeug, einem zweiten Kraftfahrzeug und einer kraftfahrzeugexternen Datenservereinrichtung, wobei das zweite Kraftfahrzeug eine Sensoreinrichtung zum Erfassen von zumindest einem Messwert aufweist und dazu eingerichtet ist, ein Sensorsignal zu erzeugen und an die kraftfahrzeugexterne Datenservereinrichtung zu übertragen. Das erste Kraftfahrzeug ist dazu eingerichtet, ein Anfragesignal an die kraftfahrzeugexterne Datenservereinrichtung zu übertragen, wobei das erste Kraftfahrzeug zum Zeitpunkt des Übertragens des Anfragesignals nicht dazu eingerichtet ist, den Messwert derselben Art zu erfassen. Die kraftfahrzeugexterne Datenservereinrichtung des Systems ist dazu eingerichtet, die eine kraftfahrzeugexterne Datenservereinrichtung betreffenden Verfahrensschritte gemäß einem Verfahren der oben beschriebenen Ausführungsformen durchzuführen. Es ergeben sich die oben genannten Vorteile.

Eines oder mehrere der Kraftfahrzeuge können dabei vorzugsweise als Kraftwagen, vorzugsweise als Personenkraftwagen, ausgestaltet sein. Die Datenservereinrichtung 16 kann beispielsweise als sogenanntes "Backend" ausgestaltet sein.

Die oben gestellte Aufgabe wird ebenfalls gelöst von einer kraftfahrzeugexternen Datenservereinrichtung, die eine Prozessoreinrichtung aufweisen kann, wobei die Datenservereinrichtung oder die optionale Prozessoreinrichtung dazu eingerichtet sind, die eine Datenservereinrichtung betreffenden Verfahrensschritte einer Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung die die Datenservereinrichtung betreffenden Verfahrensschritte einer Ausführungsform des erfindungsgemäßen Verfahrens durchzuführen. Der Programmcode kann in einem Datenspeicher der Prozessoreinrichtung gespeichert sein.

Die Erfindung wird anhand der beigefügten Zeichnungen noch einmal durch konkrete Ausführungsbeispiele näher erläutert. Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Funktionsgleiche Elemente weisen in den Figuren dieselben Bezugszeichen auf. Es zeigt:
- Fig. 1: eine schematische Skizze zu einer Ausführungsform des erfindungsgemäßen Verfahrens;
- Fig. 2: eine schematische Skizze zu einer weiteren Ausführungsform des erfindungsgemäßen Verfahrens; und
- Fig. 3: eine schematische Skizze zu einer weiteren Ausführungsform des erfindungsgemäßen Verfahrens.

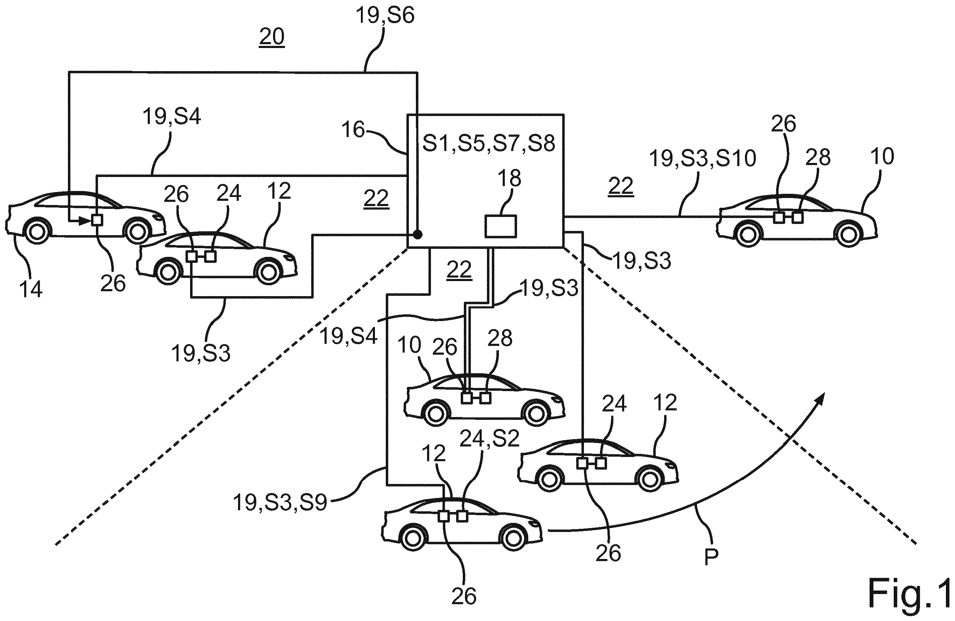

Die Fig. 1 veranschaulicht das Prinzip des erfindungsgemäßen Verfahrens. Hierzu zeigt die Fig. 1 mehrere Kraftfahrzeuge 10, 12, 14. Weiterhin zeigt die Fig. 1 eine kraftfahrzeugexterne Datenservereinrichtung 16, die beispielsweise als Internetserver oder Computer ausgestaltet sein kann und zum Beispiel eine Prozessoreinrichtung 18 aufweisen kann. Die Prozessoreinrichtung 18 kann dabei einen Mikroprozessor und/oder Mikrocontroller aufweisen.

In einem ersten Verfahrensschritt S1 unterteilt die Datenservereinrichtung 16 ein geographisches Gebiet 20 in mehrere geographische Sektoren 22 (in der Fig. 1 durch gestrichelte Linien getrennt). Das geographische Gebiet 20 kann beispielsweise anhand dessen geographischer Koordinaten festgelegt und beispielsweise eine Region oder ein Stadtgebiet umfassen. Mithilfe eines geeigneten Algorithmus kann dieses Gebiet dann in die Sektoren 22 unterteilt werden, wobei beispielsweise ebenfalls Grenzkoordinaten festgelegt werden können. Eine solche Unterteilung kann beispielsweise erfolgen, indem eine projizierte Fläche des Gebiets 20 in die Sektoren 22 unterteilt werden kann. Das Unterteilen S1 kann alternativ oder zusätzlich beispielsweise anhand einer Karte oder anhand von Kartendaten erfolgen.

Als Kriterium für das Unterteilen S1 in die geographischen Sektoren 22 kann beispielsweise in Abhängigkeit von einer Art eines Messwerts erfolgen, der von einem der Kraftfahrzeuge 10, 12 erfasst (S2) und an die Datenservereinrichtung 16 übertragen wird (S3).

In den folgenden Beispielen kann es sich bei dem Messwert um einen Wettermesswert und bei dem Sensorsignal um ein Wettersignal handeln. Alternative der Messwert zum Beispiel eine Verkehrsdichte oder einen Stau oder eine Durchschnittsgeschwindigkeit sein.

Im Beispiel der Fig. 1 weisen beispielhaft die Kraftfahrzeuge 12 jeweils eine Sensoreinrichtung 24 auf, die beispielsweise jeweils einen Regensensor aufweisen und einen Niederschlag erfassen können. Geeignete Sensoren hierzu sind dem Fachmann aus dem Stand der Technik bekannt. Die Sensoreinrichtung 24 kann den erfassten Messwert, also beispielsweise einen Niederschlag in einer Prozentangabe erfassen und in ein elektronisches Signal umwandeln, das beispielsweise über eine Steuereinrichtung 26, die beispielsweise als Steuerchip oder Schaltkreis ausgestaltet sein kann, über beispielsweise eine Datenkommunikationsverbindung 19 an die Datenservereinrichtung 16 übertragen werden (S3). Die Datenkommunikationsverbindung 19 kann beispielsweise eine Fahrzeug-zu-X-Verbindung oder vorzugsweise als Internetverbindung ausgestaltet sein. Generell sind jedoch auch andere drahtlose Signalübertragungswege oder drahtgebundene Signalübertragungswege denkbar.

Im Gegensatz zu zum Beispiel einer Temperatur kann ein Niederschlag häufig ein sehr lokales Ereignis sein, sodass es in dem beispielhaften Fall sinnvoll sein kann, geographische Sektoren 22 von einer geringeren Größe einzuteilen. Im Beispiel der Fig. 1 können die Sektoren 22 beispielsweise als Bereich um das das Sensorsignal übertragende Kraftfahrzeug 12 mit beispielsweise einem Radius von zwei Kilometern festgelegt werden. Für ein Sensorsignal des Kraftfahrzeugs 10 im mittleren Sektor 22 der Fig. 1, das beispielsweise eine Temperatur beschreiben kann, können die Sektoren 22 beispielsweise eine größere Abmessung haben. Das Kraftfahrzeug 10 kann in diesem Beispiel eine Sensoreinrichtung 28 aufweisen, die dazu eingerichtet ist, den entsprechenden Messwert einer anderen Art, also beispielsweise eine Temperatur, zu erfassen und hierzu beispielsweise ein dem Fachmann geläufigen Temperatursensor aufweisen.

Alternativ kann es sich beispielsweise bei dem mittleren geographischen Sektor 22 um ein Stadtgebiet handeln, bei dem linken geographischen Sektor 22 beispielsweise um einen Bereich nahe eines See- oder Flussufers, und/oder bei dem rechten geographischen Sektor 22 um beispielsweise ein Waldgebiet oder um eine Schlucht. Diese natürlichen und unnatürlichen Grenzen können beispielsweise auf meteorologischen Erfahrungswerten beruhen, wobei zum Beispiel bekannt ist, dass innerhalb eines Stadtgebietes tendenziell eine Temperatur höher ist als in einem Umland, dass ein Ufergebiet eines Sees oder Flusses von der unmittelbaren Wettersituation über der Wasserfläche mitbeeinflusst werden kann, indem zum Beispiel an dem Ufer meist durch die Wasserfläche bedingt die Temperaturen niedriger sind als in einem Gebiet, das weiter von dem Ufer entfernt ist.

Im Beispiel der Fig. 1 hat beispielsweise das Kraftfahrzeug 14 keine Sensoreinrichtung 24, 28, oder es kann eine Sensoreinrichtung 24, 28 aufweisen, die zum aktuellen Zeitpunkt beispielsweise ausgeschaltet sein kann. Das Kraftfahrzeug 14 erzeugt, beispielsweise mithilfe einer Steuereinrichtung 26, ein Anfragesignal und überträgt das Anfragesignal an die Datenservereinrichtung 16 (S4). Im Beispiel des mittleren geographischen Sektors 22 kann das Kraftfahrzeug 10 beispielsweise eine Sensoreinrichtung 28 aufweisen, die, wie bereits oben beschrieben, zum Erfassen einer Temperatur, jedoch nicht eines Niederschlags, eingerichtet sein kann. Dieses Kraftfahrzeug 10 kann dann zum Beispiel einerseits einen Temperaturwert und beispielhaft zusätzlich ein Anfragesignal zum Anfragen eines Niederschlagswerts an die Datenservereinrichtung übertragen (S3, S4).

Sowohl das Sensorsignal als auch das Anfragesignal beschreiben jeweils zusätzlich eine aktuelle Position des das jeweilige Signal aussendenden Kraftfahrzeugs 10, 12, 14. Die aktuelle geographische Position kann beispielsweise durch eine Navigationseinrichtung des Kraftfahrzeugs 10, 12, 14 erfasst und bereitgestellt werden. Eine Navigationseinrichtung ist dabei ein Gerät oder eine Gerätekomponente zum Navigieren, beispielsweise auf Basis von GPS-Signalen. Diese aktuelle Position kann dann beispielsweise die geographischen Koordinaten beschreiben.

Im Verfahrensschritt S5 ermittelt die Datenservereinrichtung 16 anhand dieser aktuellen Positionen, ob sich das das Anfragesignal übertragende Kraftfahrzeug 10, 14 und ein ein Sensorsignal übertragendes Kraftfahrzeug 12 in dem gleichen geographischen Sektor befinden. Hierzu können die Koordinaten beispielsweise Kartendaten, die beispielsweise in der Datenservereinrichtung 16 gespeichert sein können, verglichen werden, wobei in diese Kartendaten zum Beispiel auch die Grenzen der Sektoren 22 eingetragen oder beschrieben werden können.

Im Beispiel der Fig. 1 kann die Datenservereinrichtung 16 beispielsweise ermitteln (S5), dass sich in dem linken Sektor 22 das Kraftfahrzeug 14 und das Kraftfahrzeug 12 befinden. Daraufhin überträgt die Datenservereinrichtung 16 dann das Sensorsignal des Kraftfahrzeugs 12 im linken Sektor 22 an das Kraftfahrzeug 14 im linken Sektor 22 (S6).

Die Übertragung des Sensorsignals an das Kraftfahrzeug 14 (S6) kann beispielsweise ebenfalls über eine Internetverbindung zwischen der Datenservereinrichtung 16 und dem Kraftfahrzeug 14 erfolgen. Das Kraftfahrzeug 14, das das Sensorsignal des anderen Kraftfahrzeugs 12 empfängt, kann dann beispielsweise mittels der Steuereinrichtung 26 und einem Bildschirm eine entsprechende Wetterwarnung oder Wetternachricht ausgeben. Alternativ oder zusätzlich kann vorgesehen sein, dass die Datenservereinrichtung 16 ein Steuersignal erzeugen (S7) und dieses Steuersignal an das Kraftfahrzeug 14 übertragen (S6) kann. Das Steuersignal, das von der Steuereinrichtung 26 empfangen werden kann, kann beispielsweise ein Aktivieren eines Scheibenwischers beschreiben. In dem Kraftfahrzeug 14 des linken Sektors 22 kann also zum Beispiel der Scheibenwischer aktiviert werden, obwohl das Kraftfahrzeug 14 keinen entsprechenden Sensor dafür aufweist. Wird beispielsweise ein Sensorsignal an ein Kraftfahrzeug 12, 14 übertragen, das eine Temperatur beschreiben kann, so kann das Steuersignal beispielsweise eine Klimaanlage ansteuern. Beschreibt das Sensorsignal beispielsweise einen dichten Nebel, so kann das Steuersignal beispielsweise eine Nebelleuchte aktivieren.

In dem in der Fig. 1 mittig dargestellten Sektor 22 befinden sich beispielhaft zwei Kraftfahrzeuge 12, die jeweils eine Sensoreinrichtung 24 zum Erfassen des gleichen Typs von Messwert, dem beispielhaften Niederschlag, aufweisen können. In dem rechts dargestellten Sektor 22 befindet sich beispielhaft ein Kraftfahrzeug 10, das eine Sensoreinrichtung 28 aufweisen kann, die dazu eingerichtet ist, einen Messwert eines anderen meteorologischen Parameters aufzunehmen, beispielsweise die Temperatur. Gemäß einem Ausführungsbeispiel kann die Datenservereinrichtung 16 in einem Verfahrensschritt S8 innerhalb jedes geographischen Sektors 22 eine jeweilige Anzahl von Kraftfahrzeugen 12 mit einem Regensensor ermitteln.

Beispielsweise kann hierzu eine Anzahl von empfangenen Sensorsignalen, die, anhand der Positionsinformation, Kraftfahrzeugen 12 zugeordnet werden können, gezählt werden. Im mittleren Sektor 22 kann die Datenservereinrichtung 16 dann beispielsweise zwei Signale zählen und auf zwei Kraftfahrzeuge 12 zurückschließen, während aus dem rechten Sektor 22 kein solches Sensorsignal empfangen wird.

Im vorliegenden Beispiel hat das anfragende Kraftfahrzeug 10 des rechten Sektors 22 zwar eine Sensoreinrichtung 28, diese kann jedoch nur für die Temperaturmessung eingerichtet sein. In der Datenservereinrichtung 16 kann beispielsweise in einem Datenspeicher (in der Fig. 1 nicht gezeigt) hinterlegt sein, dass in Bezug auf eine Kraftfahrzeugdichte eine qualitativ hochwertige Aussage über einen Niederschlag getroffen werden kann, wenn mindestens ein Kraftfahrzeug 12 in einem Sektor 22 ist (S8), und damit ermitteln, dass in dem Beispiel der Fig. 1 zu wenige Kraftfahrzeuge 12 in dem rechten Sektor vorhanden sind.

Die Datenservereinrichtung 16 kann dann zum Beispiel ein Steuersignal erzeugen und an das Kraftfahrzeug 12 mit dem Regenssensor übertragen (S9). Dieses Signal kann vorzugsweise ein Navigationssignal sein, das beispielsweise eine Fahrtroute von dem aktuellen Standort des Kraftfahrzeugs 12 in den Sektor auf der rechten Seite beschreiben kann. Wie durch den Pfeil P angedeutet, kann das Kraftfahrzeug 12 dann zum Beispiel automatisch von der Steuereinrichtung 26 des Kraftfahrzeugs 12 in den rechts liegenden Sektor 22 geführt werden. Alternativ ist denkbar, dass das Navigationssignal beispielsweise auf einem Bildschirm der Datenservereinrichtung 16 angezeigt werden kann, beispielsweise falls die Datenservereinrichtung 16 bei einem Unternehmen für Fahraufträge oder einem Taxiunternehmen steht. Ein Kraftfahrzeug 12 mit der entsprechenden Sensoreinrichtung 24 kann dann beispielsweise von dem Taxiunternehmen ausgewählt werden, wenn ein Kunde des Taxiunternehmens eine Fahrt in den rechts liegenden Sektor 22 beauftragt.

Ein solches Kraftfahrzeug 10 mit einer Sensoreinrichtung 28 zum beispielhaften Erfassen einer Temperatur, also zum Erfassen eines anderen Messwerts, ist in der Fig. auch beispielhaft in dem mittleren Sektor 22 gezeigt. Über das bereits oben beschriebene Verfahren kann auch dieses Kraftfahrzeug 10 den erfassten Temperaturwert an die Datenservereinrichtung 16 übertragen (S3), und zum Beispiel gleichzeitig ein Sensorsignal bezüglich des Niederschlags empfangen (S4). Mit anderen Worten findet über die Datenservereinrichtung 16 ein "Austausch" von Sensorsignalen statt.

Die Fig. 1 zeigt ebenfalls schematisch ein Ausführungsbeispiel eines erfindungsgemäßen Systems mit einem ersten Kraftfahrzeug 10, 14, einem zweiten Kraftfahrzeug 10, 12 und der Datenservereinrichtung 16.

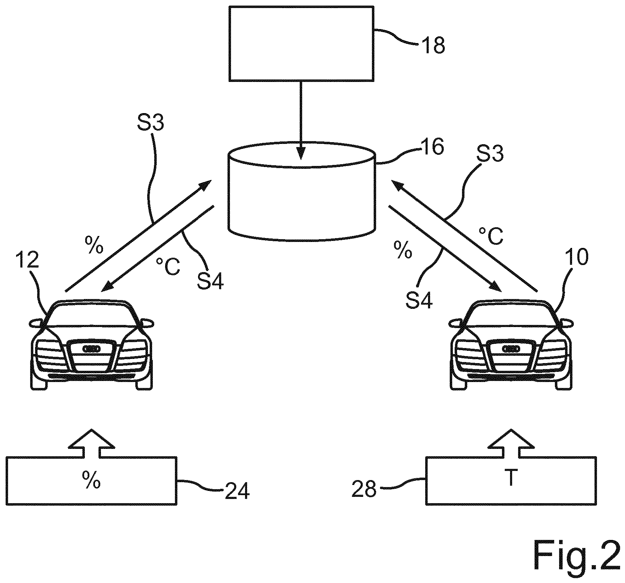

In der Fig. 2 ist ein weiteres Ausführungsbeispiel des erfindungsgemäßen Verfahrens und des erfindungsgemäßen Systems dargestellt. Das Kraftfahrzeug 10 kann beispielsweise einen Temperaturmesswert "°C", das Kraftfahrzeug 12 beispielsweise eine Niederschlagmenge "%" an die Datenservereinrichtung 16 übertragen (S3). Im Gegenzug kann das Kraftfahrzeug 10 das Sensorsignal des Kraftfahrzeugs 12 bezüglich der Niederschlagsmenge ("%") empfangen (S4), und das Kraftfahrzeug 12 kann von dem Kraftfahrzeug 10 über die Datenservereinrichtung 16 das Sensorsignal bezüglich der Temperatur ("°C") erhalten (S4).

Die Sensoreinrichtungen 24 und 28 sind dabei mit "T" für "Temperatur" und "%" für "Niederschlagsmenge" gekennzeichnet. Aus Gründen der Anschaulichkeit sind dabei die Sensoreinrichtungen 24, 28 nicht innerhalb der Kraftfahrzeuge 10, 12 dargestellt, stellen jedoch auch in der Fig. 2 einen Bestandteil des jeweiligen Kraftfahrzeugs 10, 12 dar. Die Datenservereinrichtung 16 kann optional eine Prozessoreinrichtung 18 aufweisen, die auch als Computersoftware ausgestaltet sein kann. Eine solche optionale Koordinationssoftware kann dann das erfindungsgemäße Verfahren bezüglich der durch die Datenservereinrichtung 16 durchgeführten Verfahrensschritte durchführen.

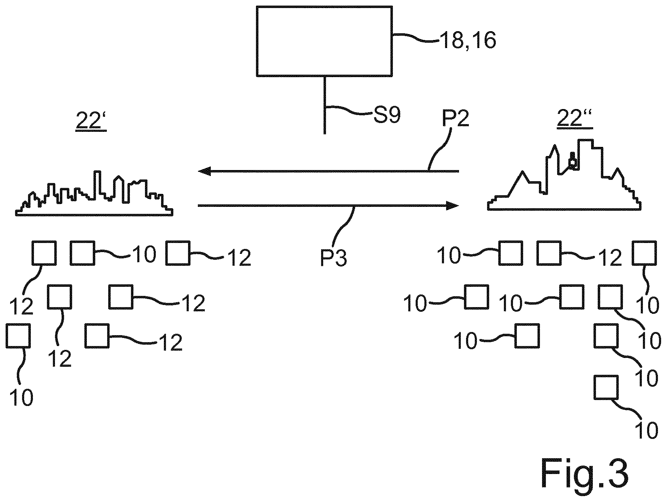

In der Fig. 3 ist schematisch ein weiteres Ausführungsbeispiel des erfindungsgemäßen Verfahrens abgebildet, in dem sich beispielsweise in einem ersten geographischen Sektor 22', beispielsweise in einer ersten Stadt, fünf Kraftfahrzeuge 12 mit jeweils einem Niederschlagssensor befinden, und zwei Kraftfahrzeuge 10 mit jeweils einem Temperatursensor. In einem weiteren geographischen Sektor 22", beispielsweise in eine anderen, benachbarten Stadt, kann sich beispielsweise ein Kraftfahrzeug 12 mit Regensensor und beispielsweise acht Kraftfahrzeuge 10 mit Temperatursensor aufhalten.

Sind dies beispielhaft Kraftfahrzeuge 10, 12 eines Fahrunternehmens, so können die Kraftfahrzeuge 10, 12 mithilfe beispielsweise einer Koordinationssoftware der Prozessoreinrichtung 18 so verteilt werden, dass eine notwendige Abdeckung in beiden Sektoren 22', 22" gegeben ist, also zum Beispiel im geographischen Sektor 22' die Anzahl der Kraftfahrzeuge 10 mit Temperatursensoren und im geographischen Sektor 22' die Kraftfahrzeuge 12 mit Regensensoren jeweils erhöht werden kann. Die Prozessoreinrichtung 18 und/oder die Koordinationssoftware kann dann zum Beispiel Navigationssignale erzeugen, und diese an die jeweiligen Kraftfahrzeuge 10, 12 übertragen (S9). So können beispielsweise drei Kraftfahrzeuge 10 mit jeweils einem Temperatursensor in den Sektor 22' geleitet werden (P2), und beispielsweise zwei Kraftfahrzeuge 12 mit jeweils einem Regensensor können von dem Sektor 22' in den Sektor 22" geleitet werden (P3).

Die obigen Ausführungsbeispiele veranschaulichen das Prinzip des erfindungsgemäßen Verfahrens zum Einsparen redundanter Sensorik über beispielsweise eine Fahrzeugflotte.

Gemäß einem weiteren Ausführungsbeispiel können nur einzelne Fahrzeuge 12 mit einer bestimmten Sensorik ausgestattet werden. Diese können die Sensorwerte, also die Messwerte als Sensorsignal an die Datenservereinrichtung 16 übertragen (S3), die beispielsweise als Backend ausgestaltet sein kann. Von dort können diese Sensorinformationen an die übrigen Kraftfahrzeuge 10, 14 verteilt werden. Dies ist besonders für Flottenbetreiber effizient. Beispielhaft kann eine Software in dem beispielhaften Backend regeln, welche Kraftfahrzeuge 10, 12 an welchen Einsatzort geschickt werden, um eine notwendige regionale Abdeckung aller Sensoreinrichtungen 24, 28 über die Gesamtflotte zu gewährleisten. Hierdurch ergibt sich unter anderem eine große finanzielle Einsparung an Sensorikkosten für Flottenfahrzeuge.

Gemäß einem weiteren Ausführungsbeispiel kann die Sensorik weiterhin in allen Kraftfahrzeugen 10, 12 verbaut werden, jedoch zum Beispiel nur bei Notwendigkeit von der Datenservereinrichtung 16 aus aktiviert werden. Eine solche Notwendigkeit kann sich zum Beispiel ergeben, wenn nicht genug Kraftfahrzeuge 10, 12 mit gleichen Sensoreinrichtungen 24, 28 im gleichen geographischen Sektor 22 unterwegs sind.

In diesem Beispiel erhöht sich eine Lebensdauer der Sensorik deutlich, und/oder es kann eine günstigere Sensorik eingekauft werden.

Gemäß einem weiteren Ausführungsbeispiel, das an der Fig. 2 veranschaulicht werden kann, kann zum Beispiel eine Koordinationssoftware in dem beispielhaften Backend, also in der Datenservereinrichtung 16, alle Kraftfahrzeuge 10, 12 kennen, also deren Konfiguration bezüglich der Sensoreinrichtung 24, 28 und wo sich die Kraftfahrzeuge 10, 12 gerade befinden. Weiterhin kann diese Software beispielsweise Fahraufträge der Kraftfahrzeuge 10, 12 organisieren. Innerhalb der Softwarekomponente kann zum Beispiel gespeichert werden, wie viele Sensoren in welchem Gebiet verfügbar sind und mit einer Datenbank abgleichen, wie viele der Sensoren pro Gebiet erforderlich sind.

Die Kraftfahrzeuge 10, 12, welche mit der Sensorik ausgerüstet sind, also welche die Sensoreinrichtung 24 oder die Sensoreinrichtung 28 aufweisen, können die Messwerte ermitteln, zum Beispiel kann ein Regensensor einen aktuellen Niederschlag ermitteln. Dieser Messwert kann dann an das beispielhafte Backend übermittelt und von dort an die anderen Kraftfahrzeuge 10 übermittelt werden, welche sich beispielsweise in einem für jeden Sensor definierten Umkreis verteilt befinden können.

Weiterhin kann die Koordinationssoftware zum Beispiel dafür verantwortlich sein, die Kraftfahrzeuge 10, 12 so auf die Fahraufträge einer Flotte zu verteilen, dass zu jedem Zeitpunkt ausreichend Kraftfahrzeuge 10, 12 zur Verfügung stehen. Ist dies nicht der Fall, so können, wie durch die Fig. 3 veranschaulicht, Kraftfahrzeuge 10, 12 gezielt so auf die Fahraufträge eingeplant werden, dass die notwendige Abdeckung der Sensorik in geographischen Sektoren 22', 22" gewährleistet sein kann oder optimiert werden kann.

## Patentansprüche

1. Verfahren zum Unterstützen eines Benutzers eines ersten Kraftfahrzeugs (10, 14) beim Betreiben des ersten Kraftfahrzeugs (10, 14), das sich in einem geographischen Gebiet (20) befindet, umfassend die Schritte:
- Erfassen von zumindest einem Messwert durch eine Sensoreinrichtung (24, 28) eines zweiten Kraftfahrzeugs (12), welches sich ebenfalls in dem Gebiet (20) befindet (S2),
- Erzeugen eines Sensorsignals, das den Messwert beschreibt, durch eine Steuereinrichtung (26) des zweiten Kraftfahrzeugs (12),
- Übertragen des Sensorsignals an die kraftfahrzeugexterne Datenservereinrichtung (16, S3),
wobei das Verfahren **dadurch gekennzeichnet ist, dass** das erzeugte Sensorsignal eine aktuelle Position des zweiten Kraftfahrzeugs (12) beschreibt, und **gekennzeichnet durch** die die kraftfahrzeugexterne Datenservereinrichtung (16) durchgeführten Schritte:
- Unterteilen des geographischen Gebiets (20) in mehrere geographische Sektoren (22, 22', 22", S1),
- Empfangen eines Anfragesignals von dem ersten Kraftfahrzeug (10, 14), wobei das erste Kraftfahrzeug (10, 14) zum Zeitpunkt des Übertragens des Anfragesignals nicht dazu eingerichtet ist, einen Messwert derselben Art zu erfassen, und wobei das Anfragesignal eine aktuelle Position des ersten Kraftfahrzeugs (10, 14) beschreibt,
- anhand der aktuellen Positionen der Kraftfahrzeuge (10, 12, 14) Ermitteln, ob sich die Kraftfahrzeuge (10, 12, 14) innerhalb des gleichen geographischen Sektors (22, 22', 22") befinden (S5),
- falls sich das erste Kraftfahrzeug (10, 14) und das zweite Kraftfahrzeug (12) innerhalb des gleichen geographischen Sektors (22, 22', 22") befinden, Übertragen des Sensorsignals an eine Steuereinrichtung (26) des ersten Kraftfahrzeugs (10, 14, S6),
- Ermitteln einer jeweiligen Anzahl von Kraftfahrzeugen (12) in mindestens einem der geographischen Sektoren (22, 22', 22"), wobei jedes der Kraftfahrzeuge (12) dazu eingerichtet ist, einen Messwert gleicher Art zu erfassen (S8), und
- bei einem Unterschreiten einer vorgegebenen Mindestanzahl durch die ermittelte Anzahl an Kraftfahrzeugen (12) Erzeugen eines Steuersignals zum Steuern eines der Kraftfahrzeuge (12, 14) zum Erhöhen der Anzahl an Kraftfahrzeugen (12, 14), die dazu eingerichtet sind, den Messwert gleicher Art zu erfassen.

2. Verfahren nach Anspruch 1, aufweisend die Schritte:
- Erfassen von zumindest einem Messwert einer anderen Art durch eine Sensoreinrichtung (24, 28) des ersten Kraftfahrzeugs (10, 14, S2),
- durch eine Steuereinrichtung (26) des ersten Kraftfahrzeugs (10, 14) Erzeugen eines Sensorsignals, das den Messwert der anderen Art und die aktuelle Position des ersten Kraftfahrzeugs (10, 14) beschreibt,
- Übertragen des Sensorsignals an die kraftfahrzeugexterne Datenservereinrichtung (16, S3),
- durch die die kraftfahrzeugexterne Datenservereinrichtung (16) Empfangen eines Anfragesignals von dem zweiten Kraftfahrzeug (12), wobei das zweite Kraftfahrzeug (12) zum Zeitpunkt des Übertragens des Anfragesignals nicht dazu eingerichtet ist, einen Messwert der anderen Art zu erfassen, und wobei das Anfragesignal eine aktuelle Position des zweiten Kraftfahrzeugs (12) beschreibt,
- falls sich das erste Kraftfahrzeug (10, 14) und das zweite Kraftfahrzeug (12) innerhalb des gleichen geographischen Sektors (22, 22', 22") befinden Übertragen des Sensorsignals an die Steuereinrichtung (26) des zweiten Kraftfahrzeugs (12, S6).

3. Verfahren nach einem der vorhergehenden Ansprüche, wobei
- das Ermitteln der jeweiligen Anzahl von Kraftfahrzeugen (12) in mindestens zwei der geographischen Sektoren (22, 22', 22") erfolgt (S8), und
- wobei bei dem Unterschreiten der vorgegebenen Mindestanzahl durch die ermittelte Anzahl an Kraftfahrzeugen (12) in einem ersten der mindestens zwei geographischen Sektoren (22, 22', 22") das Steuersignal, das ein Navigationssignal ist und ein Navigieren eines der Kraftfahrzeuge (12) aus einem anderen der mindestens zwei geographischen Sektoren (22, 22', 22") in den ersten Sektor (22, 22', 22") beschreibt, an das Kraftfahrzeug (12) aus dem anderen Sektor (22, 22', 22") übertragen wird, um die Anzahl derjenigen Kraftfahrzeuge (12), die dazu eingerichtet sind, den Messwert gleicher Art zu erfassen, in dem ersten Sektor zu erhöhen.

4. Verfahren nach einem der vorhergehenden Ansprüche, aufweisend den Schritt:
- falls sich das erste Kraftfahrzeug (10, 14) und das zweite Kraftfahrzeug (12) nicht innerhalb des gleichen geographischen Sektors (22, 22', 22") befinden Übertragen des erzeugten Steuersignals an das erste Kraftfahrzeug (10, 14, S10), wobei das Steuersignal ein Aktivierungssignal ist, das ein Aktivieren einer Sensoreinrichtung (24, 28) des ersten Kraftfahrzeugs (10, 14) zum Erfassen des Messwerts beschreibt.

5. Verfahren nach einem der vorhergehenden Ansprüche, wobei das Unterteilen des Gebiets (20, S1) in die geographischen Sektoren (22, 22', 22") in Abhängigkeit von einer Art des Messwerts erfolgt, wobei die Art des Messwerts eine Größe des geographischen Sektors (22, 22', 22") festlegt.

6. Verfahren nach Anspruch 5, wobei die Datenservereinrichtung (16), falls sie von beiden Kraftfahrzeugen (10, 12, 14) jeweils einen Messwert unterschiedlicher Art empfängt, das Gebiet (20) für jeden der Messwerte unterschiedlich unterteilt (S1).

7. Verfahren nach einem der vorhergehenden Ansprüche, wobei das Unterteilen des Gebiets (20, S1) in die geographischen Sektoren (22, 22', 22") in Abhängigkeit von einer geographischen Eigenschaft der Umgebung des zweiten Kraftfahrzeugs (12) und/oder einer natürlichen oder unnatürlichen Grenze der Umgebung mit der ermittelten Eigenschaft erfolgt.

8. Verfahren nach einem der vorhergehenden Ansprüche, wobei der Messwert ein Wettermesswert und das Sensorsignal ein Wettersignal ist, und wobei die Datenservereinrichtung (16) die folgenden Schritte durchführt:
- in Abhängigkeit von einer durch das Sensorsignal beschriebenen Art des Messwerts Erzeugen eines Steuersignals zum Aktivieren eines Scheibenwischers und/oder einer Klimaanlage und/oder einer Nebelleuchte, und
- Übertragen des Steuersignals an das erste Kraftfahrzeug (10, 14, S10).

9. System mit einem ersten Kraftfahrzeug (10, 14), einem zweiten Kraftfahrzeug (12) und einer kraftfahrzeugexternen Datenservereinrichtung (16), wobei:
- das zweite Kraftfahrzeug (12) eine Sensoreinrichtung (24, 28) zum Erfassen von zumindest einem Messwert (S2) aufweist und dazu eingerichtet ist, ein Sensorsignal zu erzeugen und an die kraftfahrzeugexterne Datenservereinrichtung (16) zu übertragen (S3),
wobei das System **dadurch gekennzeichnet ist, dass**
- das erste Kraftfahrzeug (10, 14) dazu eingerichtet ist, ein Anfragesignal an die kraftfahrzeugexterne Datenservereinrichtung (16) zu übertragen (S4), und wobei das erste Kraftfahrzeug (10, 14) zum Zeitpunkt des Übertragens des Anfragesignals nicht dazu eingerichtet ist, den Messwert derselben Art zu erfassen, und
- die kraftfahrzeugexterne Datenservereinrichtung (16) dazu eingerichtet ist, die eine kraftfahrzeugexterne Datenservereinrichtung (16) betreffenden Verfahrensschritte gemäß einem Verfahren der Ansprüche 1 bis 8 durchzuführen.

## Claims

1. Method for assisting a user of a first motor vehicle (10, 14) in the operation of the first motor vehicle (10, 14), which is located in a geographic region (20), comprising the steps:
- sensing of at least one measurement value by a sensor device (24, 28) of a second motor vehicle (12) which is also located (S2) in the region (20),
- generating a sensor signal describing the measurement value by means of a control device (26) of the second motor vehicle (12),
- transferring the sensor signal to the motor-vehicle-external data server device (16, S3),
wherein the method is **characterised in that** the sensor signal generated describes a current position of the second motor vehicle (12) and is **characterised by** the steps carried out by the motor-vehicle-external data server device (16):
- dividing the geographic region (20) into several geographic sectors (22, 22', 22", S1),
- receiving a request signal from the first motor vehicle (10, 14), wherein the first motor vehicle (10, 14) at the time of the transfer of the request signal is not prepared to sense a measurement value of the same type, and wherein the request signal describes a current position of the first motor vehicle (10, 14),
- determining, based on the current positions of the motor vehicles (10, 12, 14), whether the motor vehicles (10, 12, 14) are located (S5) within the same geographic sector (22, 22', 22"),
- if the first motor vehicle (10, 14) and the second motor vehicle (12) are located within the same geographic sector (22, 22', 22"), transferring the sensor signal to a control device (26) of the first motor vehicle (10, 14, S6),
- determining a respective number of motor vehicles (12) in at least one of the geographic sectors (22, 22', 22"), wherein each of the motor vehicles (12) is prepared to sense (S8) a measurement value of the same type, and
- if the determined number of motor vehicles (12) falls below a predefined minimum number, generating a control signal for controlling one of the motor vehicles (12, 14) to increase the number of motor vehicles (12, 14) which are prepared to sense the measurement value of the same type.

2. Method according to claim 1, comprising the steps:
- sensing of at least one measurement value of another type by means of a sensor device (24, 28) of the first motor vehicle (10, 14, S2),
- generating, by means of a control device (26) of the first motor vehicle (10, 14), a sensor signal which describes the measurement value of the other type and the current position of the first motor vehicle (10, 14),
- transferring the sensor signal to the motor-vehicle-external data server device (16, S3),
- receiving, by means of the motor-vehicle-external data server device (16), a request signal from the second motor vehicle (12), wherein the second motor vehicle (12) at the time of the transfer of the request signal is not prepared to sense a measurement value of another type, and wherein the request signal describes a current position of the second motor vehicle (12),
- if the first motor vehicle (10, 14) and the second motor vehicle (12) are located within the same geographic sector (22, 22', 22"), transferring the sensor signal to the control device (26) of the second motor vehicle (12, S6),

3. Method according to any one of the preceding claims, wherein
- determining the respective number of motor vehicles (12) takes place (S8) in at least two of the geographic sectors (22, 22', 22"), and
- wherein if the number of motor vehicles (12) in a first of the at least two geographic sectors (22, 22', 22") falls below the predefined minimum number, the control signal, which is a navigation signal and describes a navigation of one of the motor vehicles (12) from another one of the at least two geographic sectors (22, 22', 22") into the first sector (22, 22', 22"), is transferred to the motor vehicle (12) from the other sector (22, 22', 22"), in order to increase the number of those motor vehicles (12), which are prepared to sense the measurement value of the same type, in the first sector.

4. Method according to any one of the preceding claims, comprising the step:
- if the first motor vehicle (10, 14) and the second motor vehicle (12) are not located within the same geographic sector (22, 22', 22"), transferring the generated control signal to the first motor vehicle (10, 14, S10), wherein the control signal is an activation signal that describes an activation of a sensor device (24, 28) of the first motor vehicle (10, 14) for sensing the measurement value.

5. Method according to any one of the preceding claims, wherein the division of the region (20, S1) into the geographic sectors (22, 22', 22") is carried out as a function of a type of the measurement value, wherein the type of measurement value determines a size of the geographic sector (22, 22', 22").

6. Method according to claim 5, wherein the data server device (16), if it respectively receives a measurement value of a different type from both motor vehicles (10, 12, 14), divides (S1) the region (20) differently for each of the measurement values.

7. Method according to any one of the preceding claims, wherein the division of the region (20, S1) into the geographic sectors (22, 22', 22") takes place as a function of a geographic characteristic of the surroundings of the second motor vehicle (12) and/or a natural or unnatural boundary of the surroundings having the determined characteristic.

8. Method according to any one of the preceding claims, wherein the measurement value is a weather measurement value and the sensor signal is a weather signal, and wherein the data server device (16) carries out the following steps:
- generating, as a function of a type of measurement value described by the sensor signal, a control signal for activating a windscreen wiper and/or an air conditioning system and/or a fog lamp, and
- transferring the control signal to the first motor vehicle (10, 14, S10).

9. System comprising a first motor vehicle (10, 14), a second motor vehicle (12) and a motor-vehicle-external data server device (16), wherein:
- the second motor vehicle (12) has a sensor device (24, 28) for sensing at least one measurement value (S2) and is prepared to generate a sensor signal and to transfer it (S3) to the motor-vehicle-external data server device (16),
wherein the system is **characterised in that**
- the first motor vehicle (10, 14) is prepared to transfer (S4) a request signal to the motor-vehicle-external data server device (16), and wherein the first motor vehicle (10, 14), at the time of the transfer of the request signal, is not prepared to sense the measurement value of the same type, and
- the motor-vehicle-external data server device (16) is prepared to carry out the method steps relating to a motor-vehicle-external data server device (16) in accordance with a method of the claims 1 to 8.

## Revendications

1. Procédé destiné à assister un utilisateur d'un premier véhicule automobile (10, 14) lors de la conduite du premier véhicule automobile (10, 14) situé dans une zone géographique (20), comprenant les étapes consistant à :
- obtenir au moins une valeur de mesure grâce à un dispositif formant capteur (24, 28) d'un second véhicule automobile (12) également situé (S2) dans la zone (20),
- générer un signal de capteur, décrivant la valeur de mesure, grâce à un dispositif de commande (26) du second véhicule automobile (12),
- transmettre le signal de capteur au dispositif formant serveur de données (16, S3) extérieur au véhicule automobile,
dans lequel le procédé est **caractérisé en ce que** le signal de capteur généré décrit une position actuelle du second véhicule automobile (12), et est **caractérisé par** les étapes mises en œuvre grâce au dispositif formant serveur de données (16) extérieur au véhicule automobile et consistant à :
- diviser la zone géographique (20) en plusieurs secteurs géographiques (22, 22', 22", S1),
- recevoir un signal de demande en provenance du premier véhicule automobile (10, 14), dans lequel le premier véhicule automobile (10, 14), au moment de la transmission du signal de demande, n'est pas configuré pour obtenir une valeur de mesure de même type, et dans lequel le signal de demande décrit une position actuelle du premier véhicule automobile (10, 14),
- sur la base des positions actuelles des véhicules automobiles (10, 12, 14), déterminer si les véhicules automobiles (10, 12, 14) se situent (S5) dans le même secteur géographique (22, 22', 22"),
- si le premier véhicule automobile (10, 14) et le second véhicule automobile (12) se situent dans le même secteur géographique (22, 22', 22"), transmettre le signal de capteur à un dispositif de commande (26) du premier véhicule automobile (10, 14, S6),
- déterminer un nombre respectif de véhicules automobiles (12) dans au moins un des secteurs géographiques (22, 22', 22"), dans lequel chacun des véhicules automobiles (12) est configuré pour obtenir (S8) une valeur de mesure de même type, et
- si le nombre déterminé de véhicules automobiles (12) descend en dessous d'un nombre minimal prédéfini, générer un signal de commande pour commander l'un des véhicules automobiles (12, 14) afin d'augmenter le nombre de véhicules automobiles (12, 14) qui sont configurés pour obtenir la valeur de mesure de même type.

2. Procédé selon la revendication 1, comprenant les étapes consistant à :
- obtenir au moins une valeur de mesure d'un autre type grâce à un dispositif formant capteur (24, 28) du premier véhicule automobile (10, 14, S2),
- grâce à un dispositif de commande (26) du premier véhicule automobile (10, 14), générer un signal de capteur qui décrit la valeur de mesure de l'autre type et la position actuelle du premier véhicule automobile (10, 14),
- transmettre le signal de capteur au dispositif formant serveur de données (16, S3) extérieur au véhicule automobile,
- grâce au dispositif formant serveur de données (16) extérieur au véhicule automobile, recevoir un signal de demande en provenance du second véhicule automobile (12), dans lequel le second véhicule automobile (12), au moment de la transmission du signal de demande, n'est pas configuré pour obtenir une valeur de mesure d'un autre type, et dans lequel le signal de demande décrit une position actuelle du second véhicule automobile (12),
- si le premier véhicule automobile (10, 14) et le second véhicule automobile (12) se situent dans le même secteur géographique (22, 22', 22"), transmettre le signal de capteur au dispositif de commande (26) du second véhicule automobile (12, S6).

3. Procédé selon l'une quelconque des revendications précédentes, dans lequel
- la détermination du nombre respectif de véhicules automobiles (12) est mise en œuvre (S8) dans au moins deux des secteurs géographiques (22, 22', 22"), et
- dans lequel, lorsque le nombre déterminé de véhicules automobiles (12) dans un premier parmi les au moins deux secteurs géographiques (22, 22', 22") descend en dessous du nombre minimal prédéfini, le signal de commande, qui est un signal de navigation et qui décrit une navigation, dans le premier secteur (22, 22', 22"), d'un des véhicules automobiles (12) issu d'un autre parmi les au moins deux secteurs géographiques (22, 22', 22"), est transmis au véhicule automobile (12) issu de l'autre secteur (22, 22', 22") afin d'augmenter dans le premier secteur le nombre des véhicules automobiles (12) qui sont configurés pour obtenir la valeur de mesure de même type.

4. Procédé selon l'une quelconque des revendications précédentes, comprenant l'étape consistant à :
- si le premier véhicule automobile (10, 14) et le second véhicule automobile (12) ne se situent pas dans le même secteur géographique (22, 22', 22"), transmettre le signal de commande généré au premier véhicule automobile (10, 14, S10), dans lequel le signal de commande est un signal d'activation qui décrit une activation d'un dispositif formant capteur (24, 28) du premier véhicule automobile (10, 14) afin d'obtenir la valeur de mesure.

5. Procédé selon l'une quelconque des revendications précédentes, dans lequel la division de la zone (20, S1) en secteurs géographiques (22, 22', 22") est mise en œuvre en fonction d'un type de valeur de mesure, dans lequel le type de valeur de mesure détermine une taille du secteur géographique (22, 22', 22").

6. Procédé selon la revendication 5, dans lequel le dispositif formant serveur de données (16), s'il reçoit une valeur de mesure de type différent en provenance respectivement de deux véhicules automobiles (10, 12, 14), divise (S1) la zone (20) de manière différente pour chacune des valeurs de mesure.

7. Procédé selon l'une quelconque des revendications précédentes, dans lequel la division de la zone (20, S1) en secteurs géographiques (22, 22', 22") est mise en œuvre en fonction d'une caractéristique géographique de l'environnement du second véhicule automobile (12) et/ou d'une limite naturelle ou non naturelle de l'environnement avec la caractéristique déterminée.

8. Procédé selon l'une quelconque des revendications précédentes, dans lequel la valeur de mesure est une valeur de mesure météorologique et le signal de capteur est un signal météorologique, et dans lequel le dispositif formant serveur de données (16) met en œuvre les étapes ci-dessous consistant à :
- en fonction d'un type de valeur de mesure décrit par le signal de capteur, générer un signal de commande afin d'activer un essuie-glace et/ou un système de climatisation et/ou un feu antibrouillard, et
- transmettre le signal de commande au premier véhicule automobile (10, 14, S10).

9. Système avec un premier véhicule automobile (10, 14), un second véhicule automobile (12) et un dispositif formant serveur de données (16) extérieur au véhicule automobile, dans lequel :
- le second véhicule automobile (12) présente un dispositif formant capteur (24, 28) destiné à obtenir au moins une valeur de mesure (S2) et est configuré pour générer un signal de capteur et le transmettre (S3) au dispositif formant serveur de données (16) extérieur au véhicule automobile,
dans lequel le système est **caractérisé en ce que**
- le premier véhicule automobile (10, 14) est configuré pour transmettre (S4) un signal de demande au dispositif formant serveur de données (16) extérieur au véhicule automobile, et dans lequel le premier véhicule automobile (10, 14), au moment de la transmission du signal de demande, n'est pas configuré pour obtenir la valeur de mesure de même type, et
- le dispositif formant serveur de données (16) extérieur au véhicule automobile est configuré pour mettre en œuvre, conformément à un procédé selon les revendications 1 à 8, les étapes de procédé relatives à un dispositif formant serveur de données (16) extérieur au véhicule automobile.
